(19) Europäisches Patentamt
European Patent Office
Office européen des brevets

(11) **EP 4 451 449 A1**

(12) **EUROPEAN PATENT APPLICATION**
published in accordance with Art. 153(4) EPC

(43) Date of publication:
**23.10.2024 Bulletin 2024/43**

(21) Application number: **22942113.6**

(22) Date of filing: **20.05.2022**

(51) International Patent Classification (IPC):
*H01M 50/409* (2021.01)        *H01M 50/434* (2021.01)
*H01M 50/446* (2021.01)        *H01M 10/0525* (2010.01)

(52) Cooperative Patent Classification (CPC):
**H01M 10/0525; H01M 50/409; H01M 50/434;
H01M 50/446**

(86) International application number:
**PCT/CN2022/094022**

(87) International publication number:
**WO 2023/221073 (23.11.2023 Gazette 2023/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
(Hong Kong) Limited
Central, Central And Western District (HK)**

(72) Inventors:
• LIU, Feng
  Ningde, Fujian 352100 (CN)
• FAN, Yulei
  Ningde, Fujian 352100 (CN)
• WANG, Yiheng
  Ningde, Fujian 352100 (CN)
• GE, Xiaoming
  Ningde, Fujian 352100 (CN)

(74) Representative: **Gong, Jinping
CocreateIP
Neumarkterstr. 21
81673 München (DE)**

(54) **SEPARATOR AND PREPARATION METHOD THEREFOR, SECONDARY BATTERY, AND ELECTRIC DEVICE**

(57)  The present application relates to a separator, comprising: a first porous base film; a second porous base film; and a supporting layer arranged between the first porous base film and the second porous base film, wherein the supporting layer comprises a polydopamine material and inorganic particles dispersed in the polydopamine material, and has an elastic modulus ≥ 5 Gpa. The present application further relates to a secondary battery comprising the separator, a power consuming device comprising the secondary battery, and a method for preparing the separator.

<u>6</u>

*FIG. 1*

**Description**

**Technical Field**

The present application relates to the field of batteries, and particularly to a separator, a preparation method therefor, a secondary battery, and a power consuming device.

**Background Art**

Secondary batteries are widely used in various consumer electronic products and electric vehicles due to their outstanding features, such as a light weight, no pollution and no memory effect.

With the continuous development of the new energy industry, customers have put forward higher service requirements for secondary batteries. For example, the energy density or discharge rate performance of secondary batteries are designed to be higher and higher; however, the increase of the energy density or discharge rate performance of the battery is often detrimental to balancing dynamic performance, electrochemical performance, safety performance, etc.

Therefore, how to make batteries have both high discharge rate performance and high safety performance is the key challenge in the field of battery design.

**Summary of the Invention**

In view of the above problems, the present application provides a separator, which aims to enable a secondary battery comprising the separator to have a relatively good discharge rate performance and safety performance.

In order to achieve the above object, the present application provides, in a first aspect, a separator comprising:

a first porous base film;
a second porous base film; and
a supporting layer arranged between the first porous base film and the second porous base film, wherein the supporting layer comprises a polydopamine material and inorganic particles dispersed in the polydopamine material, and has an elastic modulus $\geq$ 5 Gpa.

Compared with the prior art, the present application comprises at least the following beneficial effects:
In the technical solution of an example of the present application, the supporting layer of the separator of the present application comprises a polydopamine material and inorganic particles, wherein the adhesion between the polydopamine material and the inorganic particles is good, and the polydopamine material contained in the supporting layer may improve the adhesion between the supporting layer and the first and second porous base films. In addition, the elastic modulus of the supporting layer is adjusted such that the elastic modulus falls within a specific range given by the present application so as to effectively prevent the separator from being pierced by metallic dendrites, whereby the discharge rate performance and safety performance of a secondary battery can be effectively improved. In addition, the polydopamine material as a high polymer, which has a relatively high electronic resistance, may play the role of electronic insulation and further improves the insulativity of the separator. Besides, the inorganic particles in the supporting layer can undergo a redox reaction with metallic dendrites so as to further more effectively improve the safety performance of the battery.

The above separator when used in a secondary battery can improve the service stability and life and in turn improve the discharge rate performance and safety performance of the secondary battery in which the separator is used.

In any embodiment of the present application, the supporting layer has an elastic modulus of 5-12 Gpa.

In any embodiment of the present application, the mass ratio of the inorganic particles to the polydopamine material is 70 : 30 to 95 : 5, optionally 80 : 20 to 95 : 5.

In any embodiment of the present application, the inorganic particles can undergo a redox reaction.

In any embodiment of the present application, the inorganic particles are selected from at least one of an Si oxide, an Si nitride, an Fe oxide, an Fe nitride, an Fe oxysalt, an Sn oxide, a Ti oxide, a Ti nitride, a Cu oxide, a Cu nitride, an Mn oxide, a Ge oxide, $ZrO_2$, ZnO, and AlN.

In any embodiment of the present application, the inorganic particles are capable of being chelated with an o-diphenol group to form a coordination bond.

In any embodiment of the present application, the inorganic particles have a hydroxyl group and/or a carboxyl group.

In any embodiment of the present application, the inorganic particles have a Dv50 particle size of 0.01-10 $\mu$m, optionally 0.1-0.5 $\mu$m.

In any embodiment of the present application, the supporting layer have a thickness of 0.1-10 $\mu$m, optionally 1-5 $\mu$m;

and/or the first porous base film has a thickness of 3-30 $\mu$m, optionally 7-30 $\mu$m;
and/or the second porous base film has a thickness of 3-30 $\mu$m, optionally 7-30 $\mu$m.

In any embodiment of the present application, the first porous base film has a porosity of 40-80%; and/or the second porous base film has a porosity of 40-80%.

In any embodiment of the present application, the separator has an elastic modulus $\geq$ 2 Gpa; and optionally, the separator has an elastic modulus of 2-4 GPa.

In a second aspect, the present application provides a method for preparing the above separator, comprising the following steps:

forming the supporting layer between the first porous base film and the second porous base film.

In any embodiment of the present application, forming the supporting layer between the first porous base film and the second porous base film comprises the following steps:

preparing a polydopamine material and inorganic particles into a coating;
applying the coating to a surface of the first porous base film and/or the second porous base film; and
thermally combining the first porous base film and the second porous base film, with the surfaces on which the coating resides being relative to each other, to prepare the separator.

In any embodiment of the present application, the coating is prepared by mixing the polydopamine material in the form of a solution with the inorganic particles; and

the method further comprises a step of preparing the polydopamine material solution by subjecting a mixed solution of a dopamine hydrochloride solution and a trometamol buffer solution to electropolymerization in a three-electrode system, wherein the electropolymerization has a potential interval of -0.5 V to +0.5 V, a scanning speed of 0.01-0.1 V/s, and a scanning period of 5-25.

In any embodiment of the present application, forming the supporting layer between the first porous base film and the second porous base film comprises the following steps:

forming the supporting layer on a surface of the first porous base film; and
arranging the second porous base film on a surface of the supporting layer away from the first porous base film, and performing thermal combination. In any embodiment of the present application, the step of forming the supporting layer on the surface of the first porous base film comprises the following steps:

in any embodiment of the present application, subjecting a mixed solution of a dopamine hydrochloride solution, inorganic particles, and a trometamol buffer solution to electropolymerization in a three-electrode system, and placing a gold substrate in the mixed solution during electropolymerization, wherein the electropolymerization has a potential interval of -0.5 V to +0.5 V, a scanning speed of 0.01 V/s, and a scanning period of 5-25, and a thin film-shaped supporting layer is formed on the gold substrate; and
transferring the supporting layer from the gold substrate to a surface of the first porous base film.

In any embodiment of the present application, the method further comprises the following steps: soaking the gold substrate, on which the supporting layer has been formed, in a phosphate buffer solution, and performing electrodeposition within a potential interval of -800 mV to +1,200 mV.

In any embodiment of the present application, the step of transferring the supporting layer from the gold substrate to the surface of the first porous base film comprises the following steps:

transferring the supporting layer from the gold substrate to a polymer sacrificial layer to obtain a transfer film; and
placing the transfer film in water in such a direction that the polymer sacrificial layer faces downwards, so that the polymer sacrificial layer is dissolved, and transferring the supporting layer on a water-gas interface to the first porous base film.

In a third aspect, the present application provides a secondary battery, comprising the separator according to the first aspect of the present application or a separator prepared by the method according to the second aspect of the present application.

In a fourth aspect, the present application provides a power consuming device, comprising the secondary battery of the third aspect of the present application.

The above description is only an overview of the technical solutions of the present application. In order to more clearly understand the technical means of the present application and thereby implement same according to the content of the description and to make the above and other objectives, features and advantages of the present application more obvious and easier to understand, specific embodiments of the present application are specifically described below.

Brief Description of the Drawings

Various other advantages and benefits will become apparent to those of ordinary skill in the art upon reading the following detailed description of preferred embodiments. The accompanying drawings are merely for the purpose of illustrating the preferred embodiments and are not to be construed as limiting the present application. Moreover, like reference numerals indicate like parts throughout the accompanying drawings.

Fig. 1 is a cross-sectional structural schematic diagram of an embodiment of the separator of the present application.
Fig. 2 is a scanning electron microscope (SEM) picture of a cross section of an embodiment of the separator of the present application.
Fig. 3 is a schematic diagram of an embodiment of a secondary battery.
Fig. 4 is an exploded view of Fig. 3.
Fig. 5 is a schematic diagram of an embodiment of a battery module.
Fig. 6 is a schematic diagram of an embodiment of a battery pack.
Fig. 7 is an exploded view of Fig. 6.
Fig. 8 is a schematic diagram of an embodiment of a device with a secondary battery as a power source.

List of reference numerals:

1. Battery pack; 2. upper case body; 3. lower case body; 4. battery module; 5. secondary battery; 51. shell body; 52. electrode assembly; 53. cover plate; 6. separator; 61. first porous base film; 62. second porous base film; 63. supporting layer; 631. polydopamine material; and 632. inorganic particles.

Detailed Description of Embodiments

The present application will be further described below in conjunction with specific embodiments. It should be understood that these specific embodiments are merely intended to illustrate the present application but not to limit the scope of the present application.

For the sake of brevity, only certain numerical ranges are specifically disclosed herein. However, any lower limit may be combined with any upper limit to form a range that is not explicitly described; and any lower limit may be combined with any other lower limit to form a range that is not explicitly specified, and similarly, any upper limit may be combined with any other upper limit to form an explicitly unspecified range. Furthermore, each individually disclosed point or single value itself may serve as a lower or upper limit to combine with any other point or single value or with another lower or upper limit to form an explicitly unspecified range.

In the description herein, it should be noted that unless otherwise stated, the recitation of numerical ranges by "no less than" and "no more than" include all numbers within that range including the endpoints, and the recitation of "more" in the phrase "one or more" comprises two or more.

In the description herein, unless otherwise stated, the term "or" is inclusive. That is to say, the phrase "A or B" means "A, B, or both A and B". More specifically, the condition "A or B" is satisfied by any one of the following: A is true (or present) and B is false (or not present); A is false (or not present) and B is true (or present); or both A and B are true (or present). Unless otherwise stated, the terms used in the present application have the meaning well-known to a person of ordinary skill in the art. Unless otherwise stated, the values of the parameters mentioned in the present application may be measured by various measurement methods commonly used in the art (for example, may be measured according to the method illustrated in the examples of the present application).

Secondary battery

A secondary battery refers to a battery which can continue to service by activating the active material by means of charging after the battery is discharged.

Generally, the secondary battery comprises a positive electrode plate, a negative electrode plate, a separator, and an electrolyte. During the charge/discharge of the battery, active ions are intercalated and de-intercalated back and forth between a positive electrode plate and a negative electrode plate. The separator is arranged between the positive electrode plate and the negative electrode plate, and plays the role of separation. The electrolyte functions to conduct ions between the positive electrode plate and the negative electrode plate.

[Separator]

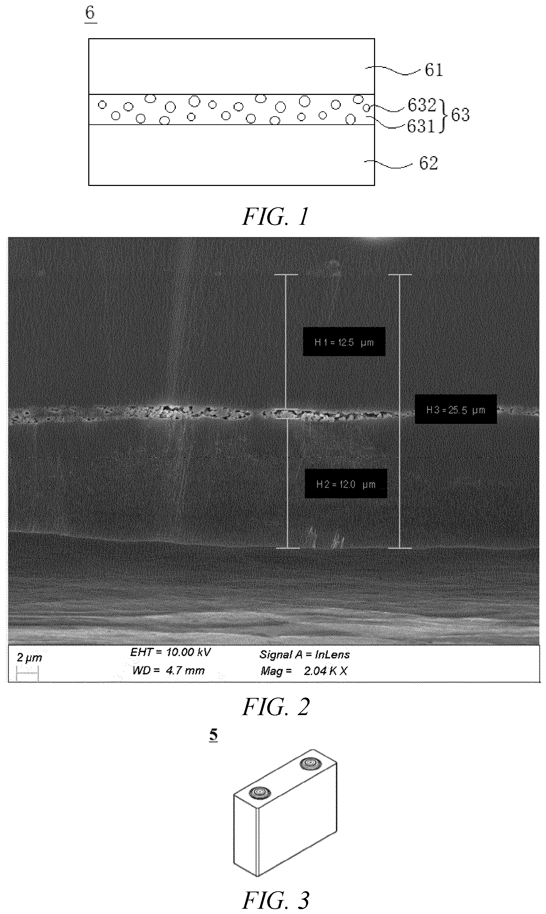

Most conventional separators are made of polymers such as polyethylene, polypropylene, and polyvinylidene fluoride. The polymers are made into porous film materials to be used as separators for secondary batteries. However, these materials have the problem of poor mechanical properties, which in turn result in the separator having a poor self-supporting property, seriously affect the service stability and life of the separator, and further adversely affect the discharge rate performance of a secondary battery in which the separator is used. In addition, metallic dendrites generated during the service of the secondary battery easily pierce through the separator, causing potential safety hazards.
The separator provided in the present application comprises: a first porous base film, a second porous base film, and a supporting layer. The supporting layer is arranged between the first porous base film and second porous base film. The supporting layer comprises a polydopamine material and inorganic particles dispersed in the polydopamine material and has an elastic modulus $\geq$ 5 Gpa, optionally 5-15 Gpa, further 5-14 Gpa, preferably 5-12 Gpa.
Furthermore, the supporting layer has an elastic modulus of 5-7 Gpa or 5-6 Gpa.
As shown in Fig. 1, the separator 6 comprises a first porous base film 61, a second porous base film 62, and a supporting layer 63. The first porous base film 61, the second porous base film 62, and the supporting layer 63 are arranged in a stacked manner. The supporting layer 63 comprises a polydopamine material 631 and inorganic particles 632 dispersed in the polydopamine material 631.
Fig. 2 is a scanning electron microscope (SEM) picture of a cross section of the separator according to an example of the present application. It can be seen from Fig. 2 that the separator comprises a first porous base film, a second porous base film, and a supporting layer. The first porous base film, the second porous base film, and the supporting layer are arranged in a stacked manner. The supporting layer comprises a polydopamine material and inorganic particles dispersed in the polydopamine material. H1, H2, and H3 are respectively the thickness of the first porous base film, the thickness of the second porous base film, and the total thickness of the separator.
In a specific example shown in Fig. 2, H1 = 12.5 $\mu$m, H2 = 12.0 $\mu$m, and H3 = 25.5 $\mu$m. In other words, the supporting layer has a thickness of 1 $\mu$m.
Without wishing to be limited to any theory, the supporting layer of the separator of the present application comprises a polydopamine material and inorganic particles, wherein the adhesion between the polydopamine material and the inorganic particles is good, and the polydopamine material contained in the supporting layer may improve the adhesion between the supporting layer and the first and second porous base films. In addition, the elastic modulus of the supporting layer is adjusted such that the elastic modulus falls within a specific range given by the present application so as to effectively prevent the separator from being pierced by metallic dendrites, whereby the discharge rate performance and safety performance of a secondary battery can be effectively improved. Furthermore, the polydopamine material as a high polymer, which has a relatively high electronic resistance, may play the role of electronic insulation and improves the insulativity of the separator. Besides, the inorganic particles in the supporting layer can undergo a redox reaction with lithium dendrites or sodium dendrites so as to consume the lithium dendrites produced by lithium separation or lithium deposition on the surface of a negative electrode, thereby effectively improving the safety performance of a battery.
The above separator when used in a secondary battery can improve the service stability and life and in turn improve the discharge rate performance and safety performance of the secondary battery in which the separator is used.
Furthermore, in a traditional separator provided with an inorganic material on one side or both sides, the inorganic material is in direct contact with a positive electrode or a negative electrode, which easily causes side reactions and thus affects the performance of a battery. Compared with the separator provided with an inorganic material on one side or both sides, the separator of the present application has a structure in which a supporting layer is sandwiched between two layers of porous base films. When lithium dendrites grow, lithium dendrites or sodium dendrites may be consumed by the supporting layer after the lithium dendrites pierce through one film layer, thereby reducing the risk of short-circuiting in the battery. The two layers of porous base films that sandwich the supporting layer inside can more effectively prevent piercing by lithium dendrites or sodium dendrites and thus ensure the safety of the battery. In addition, since the inorganic particles had been added to the supporting layer, the porosity of the separator is obviously improved, the diffusion of Li+ is accelerated, and thus, the impedance of the battery does not increase.
Therefore, the above separator has better self-supporting, insulating and structural stability properties and can improve the discharge rate performance and safety performance of a secondary battery in which the separator is used.
After in-depth research, the present inventors have found that on the basis of the separator of the present application satisfying the above design conditions, if one or more of the following conditions are further optionally satisfied, the performance of the secondary battery may be further improved.
In any embodiment of the present application, the polydopamine material has an elastic modulus $\geq$ 5 Gpa, optionally 5-12 Gpa. The present application emphasizes the self-supporting property of the separator and thus improves the service stability and life of the separator so as to improve the discharge rate performance of a secondary battery in which the separator is used. In the embodiment, the present application can effectively improve the self-supporting property of the supporting layer by using a polydopamine material with an elastic modulus in a given range.

In any embodiment of the present application, the mass ratio of the inorganic particles to the polydopamine material is 70 : 30 to 95:5, optionally 80 : 20 to 95 : 5. Comprehensively considering that the supporting layer needs to meet the requirements of having a self-supporting property and eliminating lithium dendrites or sodium dendrites to ensure the safety of a battery, the ratio of the inorganic particles to the polydopamine material is optimized, such that the mass content of the inorganic particles in the supporting layer is in the above given range, and the discharge rate performance of a secondary battery in which the separator is used may be further improved on the basis of ensuring the safety performance.

It is to be noted that the inorganic particles may undergo a redox reaction with a material including the metal sodium, the metal lithium, etc., and thus, the inorganic particles may undergo a redox reaction with lithium dendrites, sodium dendrites, etc.

In any embodiment of the present application, the inorganic particles comprise at least one of a metal oxide, a metal nitride, a metal oxysalt, a non-metal oxysalt, and a non-metal nitride.

In any embodiment of the present application, the inorganic particles are selected from at least one of an Si oxide, an Si nitride, an Fe oxide, an Fe nitride, an Fe oxysalt, an Sn oxide, a Ti oxide, a Ti nitride, a Cu oxide, a Cu nitride, an Mn oxide, a Ge oxide, $ZrO_2$, ZnO, and AlN.

Optionally, the inorganic particles are selected from at least one of $SiO_2$, Si, SiO, $SnO_2$, ZnO, $Fe_2O_3$, NiO, CuO, $TiO_2$, and $FePO_4$.

In some embodiments, the inorganic particles are capable of being chelated with an o-diphenol group to form a coordination bond. Furthermore, the inorganic particles capable of being chelated with an o-diphenol group to form a coordination bond are selected from at least one of the above metal oxide, metal nitride, and metal oxysalt. The polydopamine material contains more o-diphenol groups. The metal-containing inorganic particles may be used to ensure that the metal oxide in the supporting layer may be chelated with the o-diphenol group in the polydopamine material, such that the inorganic particles may be uniformly distributed in a cross-linked structure of the polydopamine material, thereby enhancing the structural stability of the polydopamine material and improving the self-supporting property of the polydopamine material. In addition, due to the action of chelation, the metal oxide is deposited on the surface of the polydopamine material, such that sites for reaction with lithium dendrites or sodium dendrites are exposed, thereby improving the efficiency of consuming the lithium dendrites or sodium dendrites.

Further preferably, the inorganic particles are selected from at least one of $SnO_2$, ZnO, $Fe_2O_3$, NiO, CuO, $TiO_2$, and $FePO_4$. When the type of the inorganic particles is preferably within the given range, the self-supporting property of the separator and the efficiency of eliminating the lithium dendrites or sodium dendrites are improved, thereby further improving the discharge rate performance of the secondary battery.

Furthermore, the inorganic particles have a hydroxyl group and/or a carboxyl group. The inorganic particles having a hydroxyl group may be selected from at least one of boehmite, hydroxyl-modified silicon dioxide, and the above metal oxides modified with hydroxyl. The inorganic particles having a carboxyl group may be selected from at least one of carboxyl-modified silicon dioxide and the above metal oxides modified with carboxyl.

In any embodiment of the present application, the inorganic particles have a Dv50 particle size of 0.01-10 $\mu$m. Optionally, the inorganic particles have a Dv50 particle size of 0.1-0.5 $\mu$m, such as 10 nm, 50 nm, 100 nm, 200 nm, 300 nm, 400 nm, 500 nm, 600 nm, 700 nm, 800 nm, 900 nm, 1 $\mu$m, 2 $\mu$m, 3 $\mu$m, 5 $\mu$m, 8 $\mu$m, and 10 $\mu$m. When the Dv50 particle size of the inorganic particle is controlled within the given range, the self-supporting property of the separator and the efficiency of eliminating the lithium dendrites or sodium dendrites are improved, thereby further improving the discharge rate performance of the secondary battery.

The volume average particle size Dv50 of the inorganic particles have a meaning well-known in the art and may be tested by a method known in the art. For example, it is determined by using a laser particle size analyzer (e.g. Malvern Master Size 3000). Dv50 represents the corresponding particle size when the cumulative volume distribution percentage of the inorganic particles reaches 50%.

In some embodiments, the material of the first porous base film, the material of the second porous base film, and the polydopamine material are each independently selected from at least one of polyethylene, polypropylene, polyvinylidene fluoride, aramid fibers, polyethylene terephthalate, polytetrafluoroethylene, polyacrylonitrile, polyimide, polyamide, polyester, and natural fibers.

In other words, the materials of the first porous base film, the second porous base film and the polydopamine material are the same or different.

In some embodiments, the supporting layer has a thickness of 0.1-10 $\mu$m, such as 0.1 $\mu$m, 0.3 $\mu$m, 0.5 $\mu$m, 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, and may be, such as, 0.1-0.5 $\mu$m, 0.1-1 $\mu$m, 1-5 $\mu$m, and 5-10 $\mu$m.

In some embodiments, the first porous base film has a thickness of 3-30 $\mu$m, such as 3 $\mu$m, 5 $\mu$m, 6 $\mu$m, 7 $\mu$m, 8 $\mu$m, 10 $\mu$m, 12 $\mu$m, 15 $\mu$m, 16 $\mu$m, 18 $\mu$m, 20 $\mu$m, 25 $\mu$m, and 30 $\mu$m, and may be, such as, 7-30 $\mu$m, 7-15 $\mu$m,

and 15-30 $\mu$m.

In some embodiments, the second porous base film has a thickness of 3-30 $\mu$m, such as 3 $\mu$m, 5 $\mu$m, 6 $\mu$m, 7 $\mu$m, 8 $\mu$m, 10 $\mu$m, 12 $\mu$m, 15 $\mu$m, 16 $\mu$m, 18 $\mu$m, 20 $\mu$m, 25 $\mu$m, and 30 $\mu$m, and may be, such as, 7-30 $\mu$m, 7-15 $\mu$m, and 15-30 $\mu$m.

The thickness of the above porous base films and the supporting layer may be tested by a method known in the art, for example, by a step profiler test method.

A probe of a step profiler gently slides across a surface of a sample with a very tiny force, ups and downs on the micro- or even nano-level on the surface of the sample are amplified by millions of times by means of a sensor connected to the probe, and then converted into an electronic signal, and the electronic signal is input into a computer software and finally displayed in the form of digital and graphic data.

Furthermore, the average pore size of the first porous base film and the average pore size of the second porous base film are both ≤ 150 nm.

The average pore size of the porous base film has a meaning well-known in the art, and may be tested by a method known in the art. In addition, the average pore size is determined as follows: a surface of a material is magnified by a microphotograph or the like, the number of pores per inch (25.4 mm) is calculated as the number of cells, and then, the average pore size is calculated by the following equation: average pore size = 25.4 mm/cell number.

The porosity is defined by the following equation: porosity = (1 - (mass of porous material [g] / (volume of porous material [cm3] $\times$ material density))) $\times$ 100 [%]. The porosity of a solid material may be determined by mercury porosimetry and gas adsorption according to GB/T 21650.2-2008.

In some embodiments, the first porous base film has a porosity of 40-80%.

In some embodiments, the second porous base film has a porosity of 40-80%.

The above separator has an elastic modulus reaching ≥ 2 Gpa; and optionally, the separator has an elastic modulus of 2-4 GPa.

The present application further provides a method for preparing the above separator, comprising the following steps: forming the above supporting layer between the above first porous base film and the above second porous base film.

In some embodiments, the above preparation method comprises the following steps S11-S13.

S11: A polydopamine material and inorganic particles are prepared into a coating.

S12: The above coating is applied to a surface of a first porous base film and/or a second porous base film.

S13: The first porous base film and the second porous base film are thermally combined, with the surfaces on which the coating resides being relative to each other, to prepare a separator.

In some embodiments, the coating in step S12 may be performed by means of a coating machine. It can be understood that the model of the coating machine is not particularly limited, and a commercially available coating machine may be used.

Furthermore, the coating may be performed by using a process such as transfer coating, rotary spraying, or dip coating.

Furthermore, a dispersant, such as hydrolytic polymaleic anhydride, an acrylic block polymer, a polyester block polymer, polyethylene glycol-type polyol, or a polyethyleneimine derivative, may be further added to the above coating material.

Furthermore, a thickening agent, such as carboxymethylcellulose sodium, methylcellulose, hydroxyethyl cellulose, hydroxypropyl methylcellulose, polyacrylate, polyurethane, or polyether, may be further added to the above coating material.

Furthermore, the above coating is prepared by mixing the above polydopamine material in the form of a solution and the inorganic particles. In some examples, the polydopamine material solution may be prepared by: subjecting a mixed solution of a dopamine hydrochloride solution (C8H11NO2) and a trometamol buffer solution to electropolymerization in a three-electrode system to obtain the polydopamine material solution, wherein the electropolymerization has a potential interval of -0.5 V to +0.5 V, a scanning speed of 0.01-0.1 V/s, and a scanning period of 5-25.

Furthermore, the scanning period may be 5, 8, 10, 12, 15, 20, 22, and 25, such as 5-20 or 5-15.

Furthermore, the three-electrode system may be a standard three-electrode potentiostat. Furthermore, the three-electrode system has a working electrode as a glassy carbon electrode, Ag/AgCl as a reference electrode, and a gold wire as a counter electrode.

Furthermore, the trometamol buffer solution has a pH of 8.5.

In some other embodiments, the above preparation method comprises the following steps S21-S22.

Step S21: a supporting layer is formed on a surface of a first porous base film.

Step S22: a second porous base film is arranged on a surface of the supporting layer away from the first porous base film, and performing thermal combination.

In some embodiments, step S21 may be formed by a method comprising the following steps S211 to S221.

S211: A mixed solution of a dopamine hydrochloride solution ($C_8H_{11}NO_2$), inorganic particles, and a trometamol buffer solution is subjected to electropolymerization in a three-electrode system, wherein the electropolymerization has a potential interval of -0.5 V to +0.5 V, a scanning speed of 0.01-0.1 V/s, and a scanning period of 5-25, and a gold substrate is placed in the mixed solution during electropolymerization to form a thin-film-shaped supporting layer on the gold substrate. The supporting layer is a highly cross-linked polydopamine thin film, and the inorganic particles are dispersed in the polydopamine thin film.

Furthermore, the scanning period may be 5, 8, 10, 12, 15, 20, 22, and 25, such as 5-20 or 5-15.

S212: The above supporting layer is transferred from the gold substrate to a surface of the first porous base film.

Furthermore, in order to facilitate the peeling of the gold substrate from the supporting layer, after the above electropolymerization, the gold substrate, on which the supporting layer has been formed, is soaked in a phosphate buffer solution, and electrodeposition is performed at a potential interval of -800 mV to +1,200 mV. In the process, an oxide layer is formed on the surface of the gold, such that the adhesive force between the thin film and the gold substrate is reduced, which makes it easier to separate the supporting layer from the gold substrate.

Optionally, the phosphate buffer solution has a pH value range of 7.2-7.4.

Furthermore, S212 specifically comprises the following steps: transferring the supporting layer from the gold substrate to a polymer sacrificial layer to obtain a transfer film; and then placing the transfer film in water in such a direction that the polymer sacrificial layer faces downwards, so that the polymer sacrificial layer is dissolved, and transferring the supporting layer on a water-gas interface to the above first porous base film.

The polymer sacrificial layer is used as an adhesive tape and a mechanical supporting layer for transferring the supporting layer, and is a hydrolysable polymer layer. The polymer sacrificial layer may be subsequently removed by hydrolysis. For example, the polymer sacrificial layer may be a polyvinyl alcohol layer.

In some embodiments, the thermal combination in steps S13 and S22 is performed at a temperature of 70-180°C. The thermal combination may performed at a pressure of 3-10 MPa, such as 3 MPa, 5 MPa, 7 MPa, 8 MPa, and 10 MPa. Furthermore, the thermal combination may be performed by lamination using a thermal combination roller.

Optionally, after thermal combination, a drying step may be further performed, e.g. in a vacuum drying oven at 60°C overnight, to remove a solvent.

The above first porous base film, the second porous base film, and the inorganic particles are all commercially available.

[Positive electrode plate]

In a secondary battery, a positive electrode plate generally comprises a positive electrode current collector and a positive electrode film layer disposed on the positive electrode current collector, wherein the positive electrode film layer comprises a positive electrode active material.

The positive electrode current collector may be a conventional metal foil or a composite current collector (for example, a composite current collector may be formed by arranging a metal material on a polymer substrate). By way of example, the positive electrode current collector may be an aluminum foil.

The specific types of the positive electrode active material are not limited, and an active material known in the art that may be used for a positive electrode of a secondary battery may be used, and may be selected by those skilled in the art according to actual requirements.

By way of example, the positive electrode active material may include, but is not limited to, one or more of a lithium transition metal oxide, a lithium-containing phosphate with an olivine structure, and a respective modified compound thereof. Examples of the lithium transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and a respective modified compound thereof. Examples of the lithium-containing phosphate with an olivine structure may include, but are not limited to, one or more of lithium iron phosphate, a lithium iron phosphate-carbon composite, lithium manganese phosphate, a lithium manganese phosphate-carbon composite, lithium iron manganese phosphate, a lithium iron manganese phosphate-carbon composite, and a modified compound thereof. These materials are all commercially available.

In some embodiments, the modified compounds of these materials above may be obtained by the doping modification and/or surface coating modification of the material.

The positive electrode film layer typically further optionally comprises a binder, a conductive agent, and a further optional auxiliary agent.

By way of example, the conductive agent may be one or more of superconducting carbon, acetylene black, carbon black, Ketjen black, carbon dots, carbon nanotubes, Super P (SP), graphene, and carbon nanofibers.

By way of example, the binder can be one or more of a styrene-butadiene rubber (SBR), a water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

[Negative electrode plate]

In a secondary battery, a negative electrode plate generally comprises a negative electrode current collector and a negative electrode film layer provided on the negative electrode current collector, wherein the negative electrode film layer comprises a negative electrode active material.

The negative electrode current collector may be a conventional metal foil or a composite current collector (for example, a composite current collector can be formed by providing a metal material on a polymer substrate). By way of example, the negative electrode current collector may be a copper foil.

The specific types of the negative electrode active material are not limited, and an active material known in the art that may be used for a negative electrode of a secondary battery may be used, and may be selected by those skilled in the art according to actual requirements. By way of example, the negative electrode active material can include, but is not limited to, one or more of synthetic graphite, natural graphite, hard carbon, soft carbon, a silicon-based material, and a tin-based material. The silicon-based material can be selected from one or more of elemental silicon, a silicon oxide compound (for example, silicon(II) oxide), a silicon-carbon composite, a silicon-nitrogen composite, and a silicon alloy. The tin-based material can be selected from one or more of elemental tin, a tin oxide compound, and a tin alloy. These materials are all commercially available.

In some embodiments, in order to further improve the energy density of the battery, the negative electrode active material comprises a silicon-based material.

The negative electrode film layer typically further optionally comprises a binder, a conductive agent, and a further optional auxiliary agent.

By way of example, the conductive agent may be one or more of superconducting carbon, acetylene black, carbon black, Ketjen black, carbon dots, carbon nanotubes, graphene, and carbon nanofibers.

By way of example, the binder may be one or more of a styrene-butadiene rubber (SBR), a water-based acrylic resin, polyvinylidene fluoride (PVDF), polytetrafluoroethylene (PTFE), an ethylene-vinyl acetate copolymer (EVA), polyvinyl alcohol (PVA), and polyvinyl butyral (PVB).

By way of example, the further optional auxiliary agent may be a thickening agent and a dispersing agent (for example, sodium carboxymethyl cellulose, CMC-Na), a PTC thermistor material, etc.

[Electrolyte solution]

The secondary battery may comprise an electrolyte solution, which functions to conduct ions between a positive electrode and a negative electrode. The electrolyte solution may comprise an electrolyte salt and a solvent.

By way of example, the electrolyte salt may be selected from one or more of lithium hexafluorophosphate (LiPF6), lithium tetrafluoroborate (LiBF4), lithium perchlorate (LiClO4), lithium hexafluoroarsenate (LiAsF6), lithium bisfluorosulfonimide (LiFSI), lithium bis(trifluoromethanesulfonimide) (LiTFSI), lithium trifluoromethanesulfonate (LiTFS), lithium difluorooxalatoborate (LiDFOB), lithium bis(oxalato)borate (LiBOB), lithium difluorophosphate (LiPO2F2), lithium bisoxalatodifluorophosphate (LiDFOP), and lithium tetrafluorooxalatophosphate (LiTFOP).

By way of example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution further comprise an additive. For example, the additive may comprise a negative electrode film-forming additive, or may also comprise a positive electrode film-forming additive, or may also comprise an additive that may improve certain properties of a battery, such as an additive that improves the overcharge performance of a battery, an additive that improves the high-temperature performance of a battery, and an additive that improves the low-temperature performance of a battery.

In some embodiments, the secondary battery of the present application is a lithium-ion secondary battery.

The secondary battery may be prepared according to a conventional method in the art, for example, by winding (or laminating) a positive electrode plate, a separator, and a negative electrode plate in sequence, such that the separator is arranged between the positive electrode plate and the negative electrode plate and serve the function of separation, thereby obtaining a battery cell, placing the battery cell in an outer package, injecting an electrolyte solution, and sealing the outer package to obtain the secondary battery.

In the examples of the present application, the shape of the secondary battery is not particularly limited and may be a cylindrical shape, a square shape, or any other shape. Fig. 3 shows a secondary battery 5 with a square structure as an example.

In some examples, the secondary battery may comprise an outer package. The outer package is used for packaging the positive electrode plate, the negative electrode plate and the electrolyte solution.

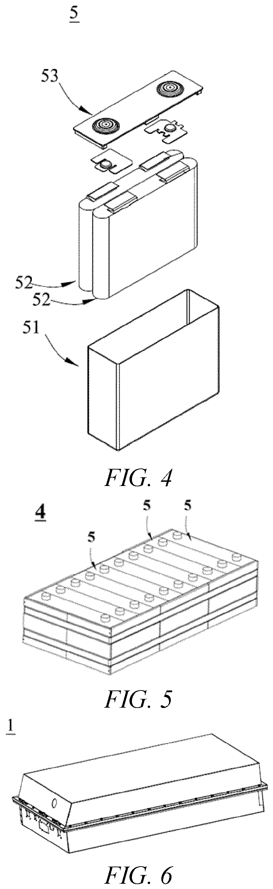

In some examples, referring to Fig. 4, the outer package may comprise a shell body 51 and a cover plate 53. Herein, the shell body 51 may comprise a bottom plate and side plates connected to the bottom plate, and the bottom plate and the side plates enclose to form an accommodating cavity. The shell body 51 has an opening in communication with the accommodating cavity, and the cover plate 53 may cover the opening to close the accommodating cavity.

The positive electrode plate, the negative electrode plate, and the separator may be subjected to a winding process or a laminating process to form an electrode assembly 52. The electrode assembly 52 is packaged in the accommodating cavity. The electrolyte solution infiltrates the electrode assembly 52. The number of the electrode assemblies 52 contained in the secondary battery 5 may be one or more, and may be adjusted according to requirements.

In some examples, the outer package of the secondary battery may be a hard shell, for example, a hard plastic shell, an aluminum shell, a steel shell, etc. The outer package of the secondary battery may also be a soft bag, such as a pouch-type soft bag. The material of the soft bag may be a plastic and may include, for example, one or more of polypropylene (PP), polybutylene terephthalate (PBT), polybutylene succinate (PBS), etc.

In some examples, the secondary battery may be assembled into a battery module, and the number of the secondary batteries contained in the battery module may be multiple, and the specific number may be adjusted according to the application and capacity of the battery module.

Fig. 5 shows a battery module 4 as an example. In the battery module 4, a plurality of secondary batteries 5 may be arranged sequentially along a length direction of the battery module 4. Apparently, the secondary batteries may also be arranged in any other manner. Furthermore, the plurality of secondary batteries 5 may be fixed by fasteners.

Optionally, the battery module 4 may further comprise an outer shell with an accommodating space, and the plurality of secondary batteries 5 are accommodated in the accommodating space.

In some examples, the above battery module may also be assembled into a battery pack, and the number of the battery modules contained in the battery pack may be adjusted according to the application and capacity of the battery pack.

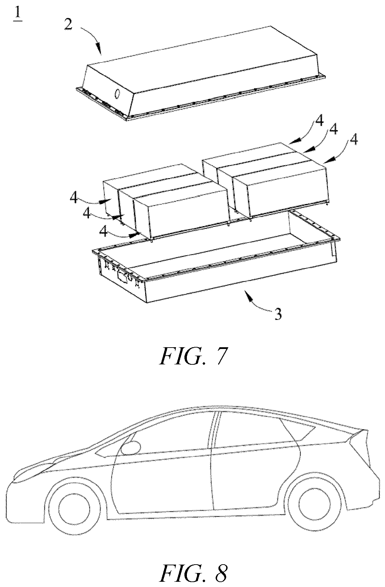

Figs. 6 and 7 show a battery pack 1 as an example. The battery pack 1 may comprise a battery case and a plurality of battery modules 4 arranged in the battery case. The battery case comprises an upper case body 2 and a lower case body 3, wherein the upper case body 2 may cover the lower case body 3 to form a closed space for accommodating the battery modules 4. A plurality of battery modules 4 may be arranged in the battery case in any manner.

[Power consuming device]

The present application further provides a power consuming device, which comprises at least one of the secondary battery, the battery modules, or the battery pack. The secondary battery, the battery modules or the battery pack may be used as a power source of the device or as an energy storage unit of the device. The device may be, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the device, a secondary battery, battery module or battery pack may be used, depending on the usage requirements thereof.

Fig. 8 shows a device as an example. The device is a pure electric vehicle, a hybrid electric vehicle, a plug-in hybrid electric vehicle, etc. In order to meet the requirements of the device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

The beneficial effects of the present application will be further described below in conjunction with examples.

**Examples**

In order to make the technical problems solved by the present application, the technical solutions, and the beneficial effects of the present application clearer, further detailed description will be given below with reference to the examples and the accompanying drawings. Apparently, the described examples are merely some, rather than all, of the examples of the present application. The following description of at least one exemplary example is merely illustrative in nature and is in no way to limit the present application and the use thereof. All other examples obtained by those of ordinary skill in the art based on the examples of the present application without involving any inventive effort shall fall within the scope of protection of the present application.

Materials used in the examples of the present application are all commercially available.

Example 1

A polypropylene film (PP film, 7 μm thick) was used as a first porous base film.

A polypropylene film (PP film, 7 μm thick) was used as a second porous base film.

Preparation of supporting layer slurry 100 mL of a dopamine hydrochloride solution ($C_8H_{11}NO_2$) at a concentration of 2 g/L and a trometamol buffer solution (pH = 8.5) were cyclically scanned at a speed of 0.01 V/s for 10 cycles at a potential interval of -0.5 V to +0.5 V using a standard three-electrode potentiostat. A glassy carbon electrode was used as a working electrode, Ag/AgCl with 3 mol KCl was used as a reference electrode, and a gold wire was used as a counter electrode to obtain a polydopamine solution.

Silicon dioxide (Dv50 particle size of 100 nm), hydrolytic polymaleic anhydride, carboxymethylcellulose sodium, and the above polydopamine solution were uniformly mixed to obtain a supporting layer slurry, the mass ratio of the silicon dioxide to the polydopamine solution was 95 : 5, and amounts of the hydrolytic polymaleic anhydride and the carboxymethylcellulose sodium were both 2% of the mass of the silicon dioxide.

Preparation of separator:

The above supporting layer slurry was separately and uniformly applied to one side of the first porous base film and of the second porous base film, and thus, two polypropylene films with one side coated with the coating were prepared. The two PP films were attached, with the sides to which the coating had been applied being relative to each other, and thermally combined at a temperature controlled to be 150°C under a pressure of 5 Mpa to form a PP film-supporting layer-PP film three-layer composite structure. The structure was then placed in a vacuum drying oven and dried at 60°C until a solvent was removed to obtain a separator.

The separator was double PP film layers between which a dopamine-modified supporting layer was sandwiched. The supporting layer had a thickness of 3 μm and the total thickness was 17 μm.

Example 2

The steps in Example 2 were the same as in Example 1, only except that the silicon dioxide in the coating was replaced by an equal mass of iron(III) oxide with the same particle size.

Example 3

The steps in Example 3 were the same as in Example 1, only except that the silicon dioxide in the coating was replaced by an equal mass of stannic oxide with the same particle size.

Example 4

The steps in Example 4 were the same as in Example 1, only except that the silicon dioxide in the coating was replaced by an equal mass of titanium dioxide (anatase) with the same particle size.

Example 5

The steps in Example 5 were the same as in Example 1, only except that the silicon dioxide in the coating was replaced by an equal mass of copper oxide with a Dv50 particle size of 100 nm.

Example 6

The steps in Example 6 were the same as in Example 1, only except that the mass ratio of the silicon dioxide to the polydopamine solution was different and was 80 : 20.

Example 7

The steps in Example 7 were the same as in Example 1, only except that the mass ratio of the silicon dioxide to the polydopamine solution was different and was 85 : 15.

Example 8

The steps in Example 8 were the same as in Example 1, only except that the mass ratio of the silicon dioxide to the polydopamine solution was different and was 70 : 30.

Example 9

The steps in Example 9 were the same as in Example 1, only except that the thickness of the formed supporting layer was adjusted to 10 μm by changing the coating amount of the coating.

Example 10

A polypropylene film (PP film, 7 μm thick) was used as a first porous base film.
A polypropylene film (PP film, 7 μm thick) was used as a second porous base film.

Preparation of supporting layer:

100 mL of a 2 g/L dopamine hydrochloride solution ($C_8H_{11}NO_2$), a trometamol buffer solution (pH = 8.5), and silicon dioxide (with a Dv50 of 100 nm) were mixed at a mass ratio of the silicon dioxide to the polydopamine hydrochloride solution of 95 : 5, and the mixture was cyclically scanned at a speed of 0.01 V/s for 10 cycles at a potential interval of -0.5 V to +0.5 V using the same standard three-electrode potentiostat as in Example 1. A glassy carbon electrode was used as a working electrode, Ag/AgCl with 3 mol KCl was used as a reference electrode, a gold wire was used as a counter electrode, and a gold substrate was additionally soaked in the dopamine solution. In the above circulation process, a catechol group of the dopamine hydrochloride was oxidized into quinone, a cyclization reaction then occurred, and in the final step, a leucine aminophenol group was oxidized into a dopamine aminophenol group, so that a highly crosslinked polydopamine (PDA) thin film containing silicon dioxide inorganic particles, namely a supporting layer, was finally formed.
A sample was then soaked in a phosphate buffer solution and cycled for several cycles at a potential interval of -800 mV to +1,200 mV. In the process, an oxide layer was formed on the surface of the gold, such that the adhesive force between the thin film and the gold substrate was reduced, which made it easier to separate the polydopamine (PDA) film containing inorganic particles from the gold substrate. The PDA film with the substrate was soaked in alcohol, and the film was carefully peeled using clean tweezers to obtain a supporting layer thin film.

Preparation of separator:

The supporting layer thin film was then transferred onto a polyvinyl alcohol (PVA) layer, which was used as an adhesive tape and a mechanical supporting layer for transferring the PDA film; and the PVA layer as a polymer sacrificial layer may be subsequently removed by hydrolysis.
The transferred PDA film was soaked in water, in which the PVA was dissolved, the PDA film at an air/water interface was then transferred to the first porous base film, the second porous base film was attached to the surface of the PDA film attached to the polypropylene film, and a three-layer composite structure was formed by means of thermal combination at a temperature controlled to be 150°C and at a pressure of 5 MPa.

Example 11

This example was basically the same as Example 10, only except that during the electropolymerization process for forming the supporting layer, the scanning voltage range was -1.0 V to +1.0 V.

Example 12

This example was basically the same as Example 11, only except that during the electropolymerization process for forming the supporting layer, the scanning speed was 0.05 V/s.

Example 13

This example was basically the same as Example 11, only except that during the electropolymerization process for forming the supporting layer, the scanning cycle was 15.

Example 14

This example was basically the same as Example 11, only except that the silicon dioxide was hydroxyl-modified silicon dioxide, which was commercially available.

Example 15

This example was basically the same as Example 11, only except that the silicon dioxide was carboxyl-modified silicon dioxide, which was commercially available.

Examples 16-19

These examples were basically the same as Example 1, and the differences were as shown in Table 1.
In Example 19, a polypropylene film (PP film, 12.5 $\mu$m thick) was used as the first porous base film, and a polypropylene film (PP film, 12 $\mu$m thick) was used as the second porous base film.

Comparative Example 1

The steps in Comparative Example 1 were the same as in Example 1, only except that the polydopamine solution in the coating was replaced with a pre-prepared 10 wt% polyvinylidene fluoride (PVDF) solution, and the remaining steps were the same as in Example 1.

Comparative Example 2

A polypropylene film (PP film, 7 $\mu$m thick) was used as a first porous base film.
A polypropylene film (PP film, 7 $\mu$m thick) was used as a second porous base film.

Preparation of supporting layer:

0.75 g of 2 g/L dopamine hydrochloride, 0.2 g of carboxymethylcellulose (CMC) sodium, 0.3 g of a styrene-butadiene rubber (SBR), and 10 mL of a mixed solution (in a water-based solvent) of deionized water and ethanol (at a volume ratio of 1 : 1) were uniformly mixed, and the pH value was adjusted to 8.5 to obtain a composite binder. 1 g of silicon dioxide nanoparticles (with a Dv50 particle size of 100 nm) with the above composite binder at a mass ratio of 95 : 5 on a solid content basis were added to 10 mL of a mixed solution of deionized water and ethanol (at a volume ratio of 1 : 1) and uniformly mixed to obtain a supporting layer slurry.
The above supporting layer slurry was separately and uniformly applied to one side of the first porous base film and of the second porous base film, and thus, two polypropylene films with one side coated with the coating were prepared. The sides of the two PP films to which the coating had been applied were attached relative to each other. The films were placed at 10-100°C for aging for 8 h to completely polymerize dopamine hydrochloride, impurities were washed away by using a water-based solvent, and the solvent was removed by drying to obtain a separator.
Some parameters of the examples and comparative examples were as shown in Table 1 below:

Table 1

| Parameter | Scanning potential interval | Scanning speed | Number of scanning periods | Type of inorganic particles | Mass ratio of inorganic particles to polydopamine solution | Supporting layer Thickness |
|---|---|---|---|---|---|---|
| Example 1 | -0.5 V to +0.5 V | 0.01 V/s | 10 | $SiO_2$ | 95 : 5 | 3 $\mu$m |
| Example 2 | -0.5 V to +0.5 V | 0.01 V/s | 10 | $Fe_2O_3$ | 95 : 5 | 3 $\mu$m |
| Example 3 | -0.5 V to +0.5 V | 0.01 V/s | 10 | $SnO_2$ | 95 : 5 | 3 $\mu$m |
| Example 4 | -0.5 V to +0.5 V | 0.01 V/s | 10 | $TiO_2$ | 95 : 5 | 3 $\mu$m |
| Example 5 | -0.5 V to +0.5 V | 0.01 V/s | 10 | CuO | 95 : 5 | 3 $\mu$m |

(continued)

| Parameter | Scanning potential interval | Scanning speed | Number of scanning periods | Type of inorganic particles | Mass ratio of inorganic particles to polydopamine solution | Supporting layer Thickness |
|---|---|---|---|---|---|---|
| Example 6 | -0.5 V to +0.5 V | 0.01 V/s | 10 | $SiO_2$ | 80 : 20 | 3 $\mu$m |
| Example 7 | -0.5 V to +0.5 V | 0.01 V/s | 10 | $SiO_2$ | 85 : 15 | 3 $\mu$m |
| Example 8 | -0.5 V to +0.5 V | 0.01 V/s | 10 | $SiO_2$ | 70 : 30 | 3 $\mu$m |
| Example 9 | -0.5 V to +0.5 V | 0.01 V/s | 10 | $SiO_2$ | 95 : 5 | 10 $\mu$m |
| Example 10 | -0.5 V to +0.5 V | 0.01 V/s | 10 | $SiO_2$ | 95 : 5 | 3 $\mu$m |
| Example 11 | -0.1 V to +0.1 V | 0.01 V/s | 10 | $SiO_2$ | 95 : 5 | 3 $\mu$m |
| Example 12 | -0.1 V to +0.1 V | 0.05 V/s | 10 | $SiO_2$ | 95 : 5 | 3 $\mu$m |
| Example 13 | -0.1 V to +0.1 V | 0.01 V/s | 15 | $SiO_2$ | 95 : 5 | 4 $\mu$m |
| Example 14 | -0.1 V to +0.1 V | 0.01 V/s | 10 | Hydroxyl-modified $SiO_2$ | 95 : 5 | 3 $\mu$m |
| Example 15 | -0.1 V to +0.1 V | 0.01 V/s | 10 | Carboxyl-modified $SiO_2$ | 95 : 5 | 3 $\mu$m |
| Example 16 | -0.5 V to +0.5 V | 0.01 V/s | 20 | $SiO_2$ | 90 : 10 | 5 $\mu$m |
| Example 17 | -0.5 V to +0.5 V | 0.01 V/s | 20 | $SiO_2$ | 95 : 5 | 6 $\mu$m |
| Example 18 | -0.5 V to +0.5 V | 0.01 V/s | 25 | $SiO_2$ | 95 : 5 | 7 $\mu$m |
| Example 19 | -0.5 V to +0.5 V | 0.01 V/s | 5 | $SiO_2$ | 85 : 15 | 1 $\mu$m |
| Comparative Example 1 | - | - | - | $SiO_2$ | - | 3 $\mu$m |
| Comparative Example 2 | - | - | - | $SiO_2$ | 95 : 5 | 3 $\mu$m |

Performance tests were as follows.

I. The separator prepared in each of the examples and comparative examples were subjected to a tensile strength test, a peel force test, a wettability test, a liquid absorption rate test, and an elastic modulus test according to the detection methods described later. The test results were listed in Table 2.

1) Test for tensile strength (transverse direction, TD) of separator

The separator to be tested was cut into a size of 10 mm in width and $\geqq$ 150 mm in length according to the specifications in ASTM D882-09 and stretched at a rate of 500 mm/min using a universal tensile machine. A maximum load value at the time of breaking the test sample was obtained and then divided by the cross-sectional area (width of test sample $\times$ thickness of substrate) of the separator, and the tensile strength of the separator was calculated.

2) Test for peel force of separator

A 20 mm wide standard adhesive tape (31B, purchased from Nitto) was attached to the separator with a constant stress (2 kg, 300 mm/min) by using a roller press, a 180 degree peel test was performed at a speed of 300 mm/min by using a tensile tester, and the peel force values at 50 points were obtained in a test distance of 50 mm to 120 mm and an average value was calculated.

3) Test for wettability of separator

The separator to be tested was cut into a size of 50 mm $\times$ 50 mm, 1 mL of a standard electrolyte solution (an electrolyte solution formed by dissolving 1 M LiPF6 in ethylene carbonate (EC), methyl ethyl carbonate (EMC), and dimethyl carbonate (DMC) at a weight ratio of 1 : 1 : 1 and mixing) was dropped on the sample, and the included angle between the drop and the separator was observed with a contact angle meter.

4) Test for liquid absorption rate of separator

The separator to be tested was cut into a size of 200 mm $\times$ 15 mm, the sample was vertically suspended and soaked in a solvent (EC : DMC : DEC at a weight ratio of 1 : 1 : 1) for the electrolyte solution in a closed space; and after 15 minutes, the height of the capillary liquid absorption by the separator was recorded, and the liquid absorption rate was calculated, i.e., the liquid absorption rate of the separator = capillary liquid absorption height/time.

5) Test for elastic modulus of supporting layer in separator and whole separator

i. Test for elastic modulus of supporting layer

The Brillouin frequency shift $\Delta v$ of a measured material of the supporting layer obtained in the examples was measured by using a Brillouin scattering spectrometer, and the elastic modulus $E$ of the supporting layer may be obtained by combining the density $\rho$ of the material.

$$E = \frac{\rho \Delta v^2 \lambda^2}{4n^2 \cos^2 \frac{\theta}{2}}$$

$\lambda$ was the wavelength of an incident light, $n$ was the refractive index of a sample, and $\theta$ was the backscattering angle. The refractive index may be measured by ellipsometry, and the density may be measured by the method described in GB/T 1033-1986.

Note:

Since a supporting layer thin film could be obtained in Examples 10-15, the supporting layer thin film could be directly used as an object. Examples 1-9 could be formed by coating a gold substrate and drying under the same conditions as in each example, and the obtained sample was then soaked in a phosphate buffer solution, circulated several cycles in a potential interval of -800 mV to +1,200 mV, and separated to obtain a supporting layer thin film, specifically similarly to Example 10.

ii. Test for elastic modulus of separator

The separators obtained in Examples 1-15 were proportionally loaded using an electronic precision universal tester to obtain a load-strain curve of the separator under different loads, and the elastic modulus was then calculated, with the elastic modulus of the separator = load stress/strain.

Table 2

| Test item | Tensile strength (TD) | Peel force | Wetting angle | Liquid absorption rate | Elastic modulus of supporting layer | Elastic modulus of separator |
|---|---|---|---|---|---|---|
| Example 1 | 6.65 MPa | 60 N | 20° | 0.8 mm/min | 5.64 GPa | 2.58 GPa |
| Example 2 | 6.72 MPa | 62 N | 18° | 0.9 mm/min | 5.52 GPa | 2.56 GPa |
| Example 3 | 6.66 MPa | 58 N | 18° | 0.8 mm/min | 5.45 GPa | 2.48 GPa |
| Example 4 | 6.58 MPa | 55 N | 18° | 0.8 mm/min | 5.47 GPa | 2.51 GPa |
| Example 5 | 6.84 MPa | 58 N | 19° | 0.8 mm/min | 5.40 GPa | 2.43 GPa |
| Example 6 | 6.76 MPa | 62 N | 21° | 0.7 mm/min | 5.30 GPa | 2.35 GPa |
| Example 7 | 6.63 MPa | 60 N | 23° | 0.7 mm/min | 5.21 GPa | 2.21 GPa |
| Example 8 | 6.60 MPa | 58 N | 23° | 0.8 mm/min | 5.21 GPa | 2.18 GPa |
| Example 9 | 6.78 MPa | 62 N | 18° | 0.8 mm/min | 5.38 GPa | 2.42 GPa |
| Example 10 | 6.62 MPa | 58 N | 17° | 0.9 mm/min | 6.04 GPa | 3.03 GPa |
| Example 11 | 6.56 MPa | 56 N | 19° | 0.6 mm/min | 5.54 GPa | 2.31 GPa |
| Example 12 | 6.69 MPa | 58 N | 23° | 0.7 mm/min | 5.39 GPa | 2.36 GPa |
| Example 13 | 6.58 MPa | 54 N | 21° | 0.7 mm/min | 5.38 GPa | 2.29 GPa |
| Example 14 | 6.53 MPa | 55 N | 21° | 0.7 mm/min | 5.21 GPa | 2.31 GPa |
| Example 15 | 6.55 MPa | 57 N | 20° | 0.8 mm/min | 5.26 GPa | 2.33 GPa |
| Example 16 | 6.69 MPa | 61 N | 21° | 0.7 mm/min | 8.25 GPa | 3.51 GPa |
| Example 17 | 6.89 MPa | 62 N | 21° | 0.7 mm/min | 10.06 GPa | 3.93 GPa |
| Example 18 | 6.97 MPa | 64 N | 22° | 0.7 mm/min | 12.00 GPa | 4.86 GPa |
| Example 19 | 6.54 MPa | 54 N | 21° | 0.7 mm/min | 5.20 GPa | 2.26 GPa |
| Comparative Example 1 | 6.25 MPa | 49 N | 28° | 0.4 mm/min | 2.40 GPa | 1.26 GPa |
| Comparative Example 2 | 6.44 MPa | 53 N | 22° | 0.7 mm/min | 2.84 GPa | 1.45 GPa |

It could be seen from Table 2 above that the elastic modulus of the supporting layer in each example was > 5 GPa and the elastic modulus of the correspondingly prepared separator was > 2 GPa. The tensile strength, peel force, wettability, and liquid absorption rate of the separator prepared in each example were all superior to those of the separator in Comparative Example 1. It could be seen that the separator had not only an excellent bonding capacity between film layers but also relatively good mechanical properties, thus having a good self-supporting effect; in addition, the separator also had a good wettability with an electrolyte solution and an excellent liquid absorption rate, which could in turn improve the discharge rate performance and safety performance of a secondary battery.

The inorganic particles of Example 2 were iron(III) oxide, which could undergo an alloying reaction with lithium dendrites, had a high specific capacity, a good stability, and a low electronic conductivity, and facilitated the consumption of the lithium dendrites, while the internal resistance brought by the separator was reduced.

The inorganic particles of Example 4 were titanium dioxide, which could undergo an intercalation reaction with lithium dendrites to produce lithium titanate. The inorganic particles had a high theoretical capacity and a stable structure, and the structure of the oxide did not change too much after lithium intercalation.

The inorganic particles of Example 5 were copper oxide, which underwent a conversion reaction with lithium to produce amorphous $Li_2O$ and nanosized metallic copper particles, and the produced nanosized copper particles could further react with $Li_2O$ to produce an oxide, such that the oxide had a relatively high specific capacity and a good cycling performance.

According to the preparation method of Example 10, during the electropolymerization process, the inorganic particles could be chelated with an o-diphenol group in polydopamine to form a coordination bond. The chelation of the inorganic oxide with the dopamine enabled the inorganic particles to be uniformly distributed in a polydopamine cross-linked body, thereby enhancing the structural stability of the polydopamine cross-linked body. In addition, due to the action of chelation, the metal oxide was deposited on the surface of the material, such that reaction sites were exposed, thereby improving the efficiency of consuming lithium dendrites.

Furthermore, it could be seen from Examples 1-6 that from the viewpoint of the supporting performance of the separator, the type of the inorganic particles was preferably $SiO_2$, $Fe_2O_3$, or $TiO_2$, and less preferably $SnO_2$.

It could be seen from Examples 1 and 6-8 that from the viewpoint of the supporting performance of the separator, the mass ratio of the inorganic particles to the polydopamine solution was preferably 95 : 5 to 80 : 20.

It could be seen from Examples 11, 14, and 15 that from the viewpoint of the liquid absorption performance of the separator, the inorganic particles were preferably hydroxyl- or carboxyl-modified inorganic particles. An SEM image of the separator prepared in Example 19 was as shown in Fig. 2.

It could be seen from Comparative Example 2 and Examples 1 and 10 that the elastic modulus of the polydopamine produced by electropolymerization according to the present invention was relatively high. After analysis by the skilled person of the present application, the reason thereof might be a change in the degree of crosslinking or the crosslinked structure thereof, and partially also might be the chelation of metal ions.

II. The separator prepared in each of the examples and comparative examples was subjected to a discharge rate test according to the detection method described later. The test results were listed in Table 3.

The steps of the discharge rate test were as follows:

1) The discharge rate test was performed using a button battery, wherein the metal lithium was used as a positive electrode of the button battery was , graphite was used as a negative electrode, 1 M LiPF6 (the weight ratio of EC : DEC in a solvent was 1 : 1) was used as an electrolyte solution, and the separator was prepared in the above examples and comparative examples.

2) Charging conditions: The battery was charged at room temperature using a constant current-constant voltage mode (CC-CV mode). Firstly, the battery was charged to a voltage of 0.05 V at a constant current of 0.5 C in a constant current mode, the mode was then switched to a constant voltage mode to charge the battery to a voltage of 4.3 V, the battery was fully charged, and the cut-off current was 0.02 C when the battery was fully charged.

3) Discharging conditions: The battery was discharged to 1.5 V in a constant current mode at different discharge rates (C-rate: 0.2 C/0.5 C/1 C/2 C/3 C).

4) Firstly, the discharge capacity measured under 0.2 C constant current discharge conditions was taken as a standard capacity (discharge rate = 100%), the discharge capacities under constant current discharge conditions at 0.5 C/1 C/2 C/3 C were then respectively recorded, and the discharge capacities thereof were then divided by the standard capacity to obtain the discharge rates under different constant current discharges and expressed in percentage.

Table 3

| Test item | Discharge rate/% | | |
|---|---|---|---|
| | 0.2 C | 1 C | 3 C |
| Example 1 | 100 | 97.4 | 85.9 |

(continued)

| Test item | Discharge rate/% | | |
|---|---|---|---|
| | 0.2 C | 1 C | 3 C |
| Example 2 | 100 | 97.2 | 86.0 |
| Example 3 | 100 | 97.6 | 86.2 |
| Example 4 | 100 | 97.7 | 86.1 |
| Example 5 | 100 | 97.2 | 85.8 |
| Example 6 | 100 | 96.8 | 85.2 |
| Example 7 | 100 | 96.4 | 85.1 |
| Example 8 | 100 | 96.9 | 84.9 |
| Example 9 | 100 | 97.0 | 84.6 |
| Example 10 | 100 | 97.6 | 86.2 |
| Example 11 | 100 | 97.1 | 85.3 |
| Example 12 | 100 | 96.2 | 84.7 |
| Example 13 | 100 | 96.1 | 84.6 |
| Example 14 | 100 | 96.8 | 84.2 |
| Example 15 | 100 | 97.0 | 84.1 |
| Example 16 | 100 | 95.6 | 83.4 |
| Example 17 | 100 | 95.6 | 83.3 |
| Example 18 | 100 | 95.4 | 82.5 |
| Example 19 | 100 | 96.8 | 84.1 |
| Comparative Example 1 | 100 | 94.8 | 81.3 |
| Comparative Example 2 | 100 | 95.0 | 82.0 |

As shown in Table 3, the separator prepared in each example was not much different from that in Comparative Example 1 in terms of the capacity under constant current discharge conditions at 0.2 C and 1 C, and the capacity under constant current discharge conditions at 3 C was significantly better than that in Comparative Example 1. This was mainly because less lithium dendrites were generated during the charge and discharge of the battery at a small rate, and the rate of the lithium dendrite generation was accelerated during the charge and discharge of the battery at a large rate. The elastic modulus of the supporting layer in each example was $\geq 5$ GPa. Compared with Comparative Example 1, the whole mechanical properties and self-supporting property of the separator were improved, the separator could be effectively prevented from being pierced by lithium dendrites, and thus, the discharge rate performance and safety performance of the secondary battery were effectively improved.

Finally, it should be noted that all the above examples are merely used for illustrating rather than limiting the technical solutions of the present application. Although the present application has been illustrated in detail with reference to the foregoing examples, it should be understood by those of ordinary skill in the art that the technical solutions described in the foregoing examples may still be modified, or some or all of the technical features thereof may be equivalently substituted; and such modifications or substitutions do not make the essence of the corresponding technical solution depart from the scope of the technical solutions of the examples of the present application, and should all fall within the scope of the claims and the description of the present application. In particular, the technical features mentioned in each of the examples may be combined in any manner, provided that there is no structural conflict. The present application is not limited to the specific examples disclosed herein but includes all the technical solutions that fall within the scope of the claims.

**Claims**

1. A separator, comprising:

   a first porous base film;
   a second porous base film; and
   a supporting layer arranged between the first porous base film and the second porous base film, wherein the supporting layer comprises a polydopamine material and inorganic particles dispersed in the polydopamine material, and has an elastic modulus ≥ 5 Gpa.

2. The separator according to claim 1, wherein the supporting layer has an elastic modulus of 5-12 Gpa.

3. The separator according to claim 1, wherein the mass ratio of the inorganic particles to the polydopamine material is 70 : 30 to 95 : 5, optionally 80 : 20 to 95 : 5.

4. The separator according to any one of claims 1 to 3, wherein the inorganic particles are capable of undergoing a redox reaction.

5. The separator according to any one of claims 1 to 4, wherein the inorganic particles are selected from at least one of an Si oxide, an Si nitride, an Fe oxide, an Fe nitride, an Fe oxysalt, an Sn oxide, a Ti oxide, a Ti nitride, a Cu oxide, a Cu nitride, an Mn oxide, a Ge oxide, $ZrO_2$, ZnO, and AlN.

6. The separator according to any one of claims 1 to 5, wherein the inorganic particles are capable of being chelated with an o-diphenol group to form a coordination bond.

7. The separator according to any one of claims 1 to 6, wherein the inorganic particles have a hydroxyl group and/or a carboxyl group.

8. The separator according to any one of claims 1 to 7, wherein the inorganic particles have a Dv50 particle size of 0.01-10 $\mu$m, optionally 0.1-0.5 $\mu$m.

9. The separator according to any one of claims 1 to 8, wherein the supporting layer has a thickness of 0.1-10 $\mu$m, optionally 1-5 $\mu$m.

   and/or the first porous base film has a thickness of 3-30 $\mu$m, optionally 7-30 $\mu$m;
   and/or the second porous base film has a thickness of 3-30 $\mu$m, optionally 7-30 $\mu$m.

10. The separator according to any one of claims 1 to 9, wherein the first porous base film has a porosity of 40-80%; and/or the second porous base film has a porosity of 40-80%.

11. The separator according to any one of claims 1 to 10, wherein the separator has an elastic modulus ≥ 2 Gpa; and optionally, the separator has an elastic modulus of 2-4 GPa.

12. A method for preparing the separator according to any one of claims 1 to 11, comprising the following steps: forming the supporting layer between the first porous base film and the second porous base film.

13. The method according to claim 12, wherein forming the supporting layer between the first porous base film and the second porous base film comprises the following steps:

    preparing a polydopamine material and inorganic particles into a coating;
    applying the coating to a surface of the first porous base film and/or the second porous base film; and
    thermally combining the first porous base film and the second porous base film, with the surfaces on which the coating resides being relative to each other, to prepare the separator.

14. The method according to claim 13, wherein the coating is prepared by mixing the polydopamine material in the form of a solution with the inorganic particles; and
    the method further comprises a step of preparing the polydopamine material solution by subjecting a mixed solution of a dopamine hydrochloride solution and a trometamol buffer solution to electropolymerization in a three-electrode system, wherein the electropolymerization has a potential interval of -0.5 V to +0.5 V, a scanning speed of 0.01-0.1 V/s, and a scanning period of 5-25.

15. The method according to claim 12, wherein forming the supporting layer between the first porous base film and the second porous base film comprises the following steps:

forming the supporting layer on a surface of the first porous base film; and
arranging the second porous base film on a surface of the supporting layer away from the first porous base film, and performing thermal combination.

16. The method according to claim 15, wherein the step of forming the supporting layer on the surface of the first porous base film comprises the following steps:

subjecting a mixed solution of a dopamine hydrochloride solution, inorganic particles, and a trometamol buffer solution to electropolymerization in a three-electrode system, and placing a gold substrate in the mixed solution during electropolymerization, wherein the electropolymerization has a potential interval of -0.5 V to +0.5 V, a scanning speed of 0.01 V/s, and a scanning period of 5-25, and a thin film-shaped supporting layer is formed on the gold substrate; and
transferring the supporting layer from the gold substrate to a surface of the first porous base film.

17. The method according to claim 16, wherein the method comprises the following steps: soaking the gold substrate, on which the supporting layer has been formed, in a phosphate buffer solution, and performing electrodeposition within a potential interval of -800 mV to +1,200 mV.

18. The method according to claim 16 or 17, wherein the step of transferring the supporting layer from the gold substrate to the surface of the first porous base film comprises the following steps:

transferring the supporting layer from the gold substrate to a polymer sacrificial layer to obtain a transfer film; and
placing the transfer film in water in such a direction that the polymer sacrificial layer faces downwards, so that the polymer sacrificial layer is dissolved, and transferring the supporting layer on a water-gas interface to the first porous base film.

19. A secondary battery, comprising the separator according to any one of claims 1-11, or a separator prepared by the method according to any one of claims 12-18.

20. A power consuming device, comprising the secondary battery according to claim 19.

6

FIG. 1

FIG. 2

5

FIG. 3

5

53

52

52

51

FIG. 4

4

5

5

5

FIG. 5

1

FIG. 6

FIG. 7

FIG. 8

## INTERNATIONAL SEARCH REPORT

| International application No. |
| --- |
| **PCT/CN2022/094022** |

**A. CLASSIFICATION OF SUBJECT MATTER**

H01M 50/409(2021.01)i; H01M 50/434(2021.01)i; H01M 50/446(2021.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 隔膜, 隔离膜, 多孔膜, 多孔基膜, 聚多巴胺, 无机, 陶瓷, separator?, membrane?, diaphragm?, spacing element?, ceramic, polydopamine, inorganic particle

**C. DOCUMENTS CONSIDERED TO BE RELEVANT**

| Category* | Citation of document, with indication, where appropriate, of the relevant passages | Relevant to claim No. |
| --- | --- | --- |
| X | CN 111799499 A (GUANGXI HUAZHENG NEW ENERGY TECHNOLOGY CO., LTD.) 20 October 2020 (2020-10-20) description, paragraphs [0005]-[0022] | 1-20 |
| X | CN 106654125 A (XIAMEN UNIVERSITY) 10 May 2017 (2017-05-10) description, paragraphs [0008]-[0045] | 1-20 |
| X | CN 111180642 A (BENQ MATERIALS (WUHU) CORP. et al.) 19 May 2020 (2020-05-19) description, paragraphs [0006]-[0096] | 1-20 |
| X | CN 107507950 A (XIAMEN UNIVERSITY) 22 December 2017 (2017-12-22) description, paragraphs [0008]-[0070] | 1-20 |
| A | CN 109950453 A (FOSHAN DONGHANG OPTOELECTRONICS TECHNOLOGY CO., LTD.) 28 June 2019 (2019-06-28) entire document | 1-20 |
| A | CN 105428571 A (CHINA FAW CO., LTD.) 23 March 2016 (2016-03-23) entire document | 1-20 |

☐ Further documents are listed in the continuation of Box C.　☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 December 2022** | **18 January 2023** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/094022**

| Patent document cited in search report | | | Publication date (day/month/year) | Patent family member(s) | | | Publication date (day/month/year) |
|---|---|---|---|---|---|---|---|
| CN | 111799499 | A | 20 October 2020 | CN | 111799499 | B | 12 November 2021 |
| CN | 106654125 | A | 10 May 2017 | None | | | |
| CN | 111180642 | A | 19 May 2020 | None | | | |
| CN | 107507950 | A | 22 December 2017 | None | | | |
| CN | 109950453 | A | 28 June 2019 | None | | | |
| CN | 105428571 | A | 23 March 2016 | CN | 105428571 | B | 20 April 2018 |

Form PCT/ISA/210 (patent family annex) (January 2015)